# DEMANDE DE BREVET EUROPEEN

(11) **EP 1 542 169 A1**
(43) Date de publication de la demande: **15.06.2005**
(21) Numéro de dépôt: 04291640.3
(22) Date de dépôt: 29.06.2004
(51) Int. Cl.: G07B 15/00, G07C 9/00

(54) **Procédé et système de contrôle d'un titre d'autorisation d'accès à un service par identification biométrique**

(71) Demandeur: FRANCE TELECOM, 75015 Paris (FR)
(72) Inventeur: Levionnais, Philippe, 14000 Caen (FR); Lepetit, Olivier, 14800 Deauville (FR)
(74) Mandataire: Hassine, Albert

(57) **Abrégé**

Pour le contrôle d'un titre d'autorisation d'accès :
- un terminal mobile, à disposition d'un client, fournit un signal dans lequel un caractère biométrique du client peut être déterminé, et
- un centre de gestion, comportant une mémoire pour stocker une association de données relatives au titre et au caractère biométrique du client, communique avec le terminal pour obtenir le signal précité et comparer le caractère biométrique obtenu de ce signal à un caractère biométrique tiré des données déjà stockées.

## Description

L'invention concerne un procédé de transfert de données par télécommunication, pour contrôler un titre d'autorisation de l'accès à un service ou d'acquisition d'un produit.

On connaît par la demande de brevet français publiée FR-2816087 de la demanderesse un procédé de gestion d'un justificatif de la réservation d'un produit ou d'un service par un client. Le procédé consiste à traiter des informations de réservation relatives au produit ou au service réservé dans une mémoire d'un objet portable communicant du client, tel qu'un téléphone (ou "*terminal*") mobile. Les informations de réservation précitées servent ainsi de justificatif de réservation. Elles sont stockées dans une mémoire de l'objet portable communicant jusqu'à une utilisation ultérieure, notamment pour le contrôle de la validité du titre dont les informations de réservation sont stockées. Pour l'acquisition et/ou le contrôle de validité du titre, l'objet portable communique avec un centre de gestion des réservations, tel qu'un serveur dans le cas d'un terminal mobile.

Dans un mode de délivrance, on élabore une requête de réservation ou d'acquisition dont les informations qui la caractérisent sont stockées dans une mémoire de l'objet communicant. Dans un mode de contrôle, on compare des informations de disponibilité et/ou de validité stockées dans une mémoire du centre de gestion des réservations aux informations précitées qui sont initialement stockées dans la mémoire de l'objet communicant.

Une telle réalisation permet, de façon avantageuse, de se passer des titres physiques habituels, imprimés sur papier, tels que des titres de transport ou des billets de spectacle. En effet, les informations stockées dans la mémoire du terminal, contrôlables et pouvant être transférées à tout moment en tant que fichier informatique, remplacent ainsi les titres physiques habituels.

La technique décrite dans FR-2816087 est très prometteuse et, à l'heure actuelle, elle est susceptible d'être utilisée pour de nombreux et divers services. Cependant, la réservation et/ou l'acquisition d'une pluralité de titres risquent de saturer la mémoire du terminal. De plus, le contrôle de la validité des titres n'est pas encore complètement sécurisé, puisque le vol du terminal entraîne aussi la soustraction frauduleuse du titre.

La présente invention vient améliorer la situation.

Elle propose à cet effet un procédé de contrôle d'un titre d'autorisation d'accès à un service ou d'acquisition d'un produit, dans lequel :
a) on prévoit :
   - un terminal mobile, à disposition d'un client, capable de fournir un signal comportant des données relatives à au moins un caractère biométrique du client et à -partir desquelles le client peut être authentifié,
   - un centre de gestion des titres, comportant une mémoire pour stocker des données, et capable de communiquer avec ledit terminal mobile,
   - et au moins un poste de contrôle capable de communiquer avec le centre de gestion,
b) préalablement au contrôle, on stocke, dans la mémoire du centre de gestion, une séquence de données relatives au moins à un titre du client et des données relatives à un caractère biométrique propre audit client, en association avec un identifiant du client,
c) et, au contrôle, le terminal transmet au moins ledit signal vers le centre de gestion tandis que le centre de gestion :
   - compare des données relatives au caractère biométrique et extraites du signal reçu aux données stockées dans la mémoire du centre de gestion,
   - et renvoie au poste de contrôle un message de validité ou d'invalidité du titre, en fonction de ladite comparaison et des données relatives au titre et stockées dans la mémoire du centre de gestion.

Dans une réalisation préférée, ledit signal est un signal de parole, tandis que le centre de gestion des titres effectue, à partir dudit signal, une authentification vocale permettant de comparer la voix du client à celle stockée en référence lors de la phase d'enregistrement.

Dans une variante, le caractère biométrique est relatif à une empreinte iridienne, ou encore à une empreinte digitale ou, de façon plus générale, à tout caractère biométrique dont des données permettant d'authentifier un individu peuvent être transmises à partir d'un terminal mobile.

Avantageusement, dans la variante où l'on authentifie la voix du client, le centre de gestion identifie dans ledit signal, à la fois, des informations sur ledit titre et les données relatives à la voix du client.

Dans cette réalisation, ledit signal est préférentiellement un signal de parole correspondant à une phrase que prononce le client en indiquant des caractéristiques du titre. Le centre de gestion des titres reconnaît avantageusement les mots prononcés dans ladite phrase et détermine une correspondance avec des données relatives au titre et stockées dans la mémoire du centre de gestion.

Préférentiellement, à l'étape d'acquisition b), le client établit une connexion entre son terminal et le centre de gestion et, pendant cette connexion :
- le centre de gestion invite le client à prononcer ladite phrase dans son terminal,
- le centre de gestion reconnaît dans ladite phrase des caractéristiques du titre et identifie des paramètres vocaux propres au client,
- le centre de gestion stocke dans sa mémoire, l'identifiant du client et, en correspondance de cet identifiant, les caractéristiques du titre et les paramètres vocaux propres au -client, sous forme de données.

En variante, à l'étape d'acquisition b), le client établit une connexion entre son terminal et le centre de gestion et, pendant cette connexion :
- le centre de gestion invite le client à choisir des caractéristiques du titre,
- le centre de gestion invite le client à prononcer en outre une phrase type dans son terminal,
- le centre de gestion identifie dans ladite phrase type des paramètres vocaux propres au client,
- le centre de gestion stocke dans sa mémoire, l'identifiant du client et, en correspondance de cet identifiant, les caractéristiques du titre et les paramètres vocaux propres au client, sous forme de données.

Préférentiellement, pour céder le titre d'un premier client au profit d'un second client :
- le terminal du premier client transmet au moins ledit signal vers le centre de gestion, avec un identifiant d'un terminal du second client,
tandis que le centre de gestion :
- compare des données relatives à un caractère biométrique identifié à partir du signal reçu à des données stockées dans la mémoire du centre de gestion,
- établit une connexion avec le terminal du second client pour obtenir des données relatives à un caractère biométrique propre au second client, et
- stocke, dans ladite mémoire, une séquence de données relatives au caractère biométrique propre au second client, en association avec les données relatives au titre et avec l'identifiant du second client.

La présente invention vise aussi un système de contrôle d'un titre d'autorisation d'accès à un service ou d'acquisition d'un produit, ce système comportant :
- un terminal mobile, à disposition d'un client, capable de fournir un signal comportant des données relatives à au moins un caractère biométrique du client, ainsi qu'un identifiant de client,
- un centre de gestion des titres, comportant une mémoire pour stocker des données relatives au titre et des données relatives au caractère biométrique propre au client, en association avec l'identifiant du client, et capable de communiquer avec ledit terminal mobile pour obtenir ledit signal et comparer les paramètres biométriques tirés dudit signal aux paramètres biométriques tirés des données du client stockées dans ladite mémoire,
- au moins un poste de contrôle capable de communiquer avec ledit centre de gestion pour recevoir dudit centre de gestion un message d'autorisation ou de refus d'accès.

Dans une réalisation avantageuse, le terminal comporte un capteur sonore et le signal que délivre le terminal est un signal de parole, tandis que le centre de gestion des titres comporte un dispositif d'authentification vocale permettant d'authentifier la voix du client.

Avantageusement, ledit signal est un signal de parole correspondant à une phrase que prononce le client en indiquant des caractéristiques du titre, et le centre de gestion des titres comporte en outre un module de reconnaissance vocale, propre à reconnaître les mots prononcés dans ladite phrase et à déterminer une correspondance avec des données du titre stockées dans la mémoire dudit centre de gestion.

La présente invention vise aussi un serveur pour assurer la gestion de titres d'autorisation d'accès à un service ou d'acquisition d'un produit par des clients, destiné à un système de contrôle desdits titres, ce serveur comportant :
- une mémoire pour stocker, pour chaque client, des données relatives à un titre et des données relatives à au moins un caractère biométrique propre audit client, en association avec un identifiant dudit client,
- des moyens de réception et de traitement d'un signal acquis pendant une phase de contrôle, ledit signal comportant :
   o un identifiant de client,
   o des données relatives à un titre et
   o des données relatives à au moins un caractère biométrique propre à un candidat,
- des moyens de comparaison des données tirées dudit signal et des données stockées dans ladite mémoire pour vérifier une validité du titre et authentifier le candidat en tant que client, et
- des moyens pour transmettre un message d'autorisation ou de refus d'accès.

Avantageusement, le signal que reçoit et traite le serveur est un signal de parole et le serveur comporte en outre un dispositif d'authentification vocale permettant d'authentifier la voix du client.

Dans cette réalisation, le signal comporte des mots d'une phrase que prononce le client et indiquant des caractéristiques du titre, et lesdits moyens de comparaison sont avantageusement aptes à déterminer une correspondance avec des données du titre stockées dans la mémoire.

D'autres avantages et caractéristiques de l'invention apparaîtront à la lecture de la description détaillée donnée ci-après à titre d'exemple, et des dessins annexés sur lesquels :
- la figure 1 représente schématiquement les échanges entre le terminal mobile, le poste de contrôle et le serveur, pour la mise en oeuvre de l'étape de contrôle c) précitée ;
- la figure 2 représente schématiquement les échanges entre le terminal mobile et le serveur, pour la mise en oeuvre de l'étape b) d'acquisition d'un titre ;
- la figure 3 représente schématiquement les échanges entre deux terminaux mobiles et le serveur, pour le transfert d'un titre déjà acquis par un premier client CL1, au profit d'un second client CL2 ; et
- la figure 4 représente schématiquement 1'-architecture d'un serveur SER pour assurer la gestion des titres.

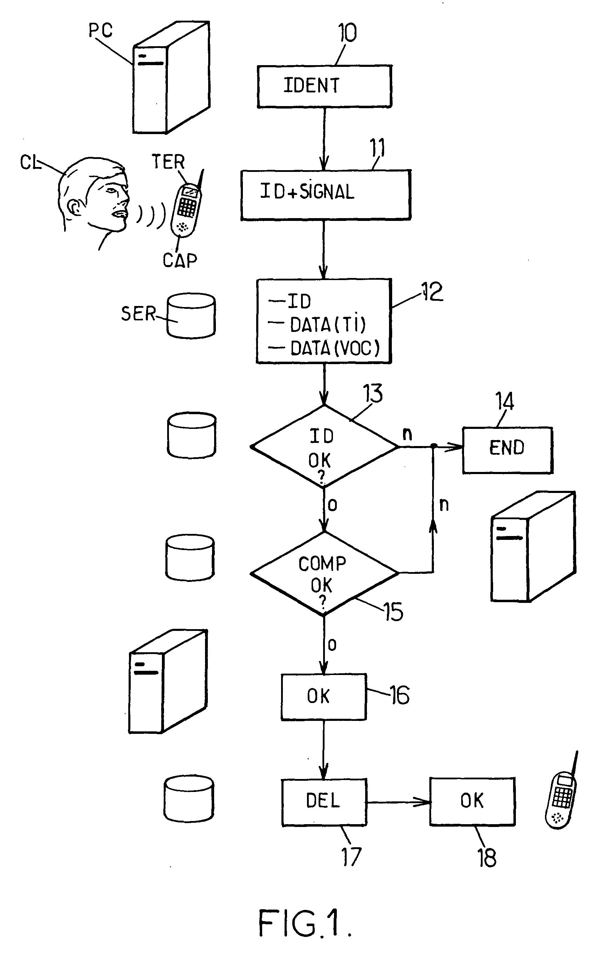

En référence à la figure 1, on indique tout d'abord que, dans le système au sens de la présente invention, le sigle TER vise un terminal mobile, par exemple un téléphone mobile, ou encore un PDA (pour "*Personal Digital Assistant*"). Le sigle PC vise un poste de contrôle, par exemple un ordinateur portable ou fixe. Le sigle SER vise un centre de gestion des titres, tel qu'un serveur distant connecté au poste de contrôle PC. En pratique, le terminal mobile TER, au moins, est connecté à un réseau de téléphonie mobile de communication, par exemple le réseau GSM/GPRS, tandis que le serveur SER peut être connecté au réseau commuté, les deux réseaux étant reliés par une passerelle classique en soi, ce qui permet d'établir des communications entre le terminal mobile TER et le serveur SER, le cas échéant via le poste de contrôle PC, comme on le verra plus loin. A ce titre, on indique que le poste de contrôle PC comporte aussi une interface de communication vers le serveur SER.

On indique aussi qu'un ou plusieurs paramètres biométriques peuvent être tirés de caractères biométriques tels que la voix, l'iris, l'empreinte digitale, ou autre. Des capteurs biométriques, tels qu'un microphone pour une authentification vocale, permettent d'obtenir un fichier qui est un fichier son dans le cas de la voix, une image pour l'empreinte iridienne ou digitale, ou autre. L'authentification consiste d'abord à calculer ces paramètres (dits encore *"coefficients"*) à partir du fichier précité et de les comparer à des paramètres calculés à partir d'un fichier de référence. On comprendra ainsi que les données précitées, relatives au caractère biométrique d'un client et transmises dans le signal qu'envoie le terminal mobile vers le centre de gestion, sont les données de ce fichier ou, en variante, directement les coefficients calculés, précités (si le terminal dispose d'une capacité de traitement suffisante).

On décrit maintenant les différentes étapes prévues, dans l'exemple représenté sur la figure 1, pour le contrôle du titre, à un instant où l'utilisateur CL du terminal TER souhaite consommer le titre. On indique que le poste de contrôle PC est préférentiellement prévu à l'entrée d'une salle de spectacles, ou encore à l'entrée d'une voie d'accès dans un aéroport, ou dans une gare, ou autres, en tant que borne de contrôle pour accéder à un service réservé préalablement par l'utilisateur CL du terminal TER. En variante, on indique que ce poste de contrôle PC peut être installé dans les locaux d'un commerce (boutique ou autre) pour acquérir un produit déjà payé.

On indique en outre que la procédure de paiement, en soi, du service ou du produit n'est pas décrite ici.

Le poste de contrôle PC peut comporter des moyens (un moniteur ou des haut-parleurs) pour informer le client d'un numéro de centre de gestion des titres à appeler.

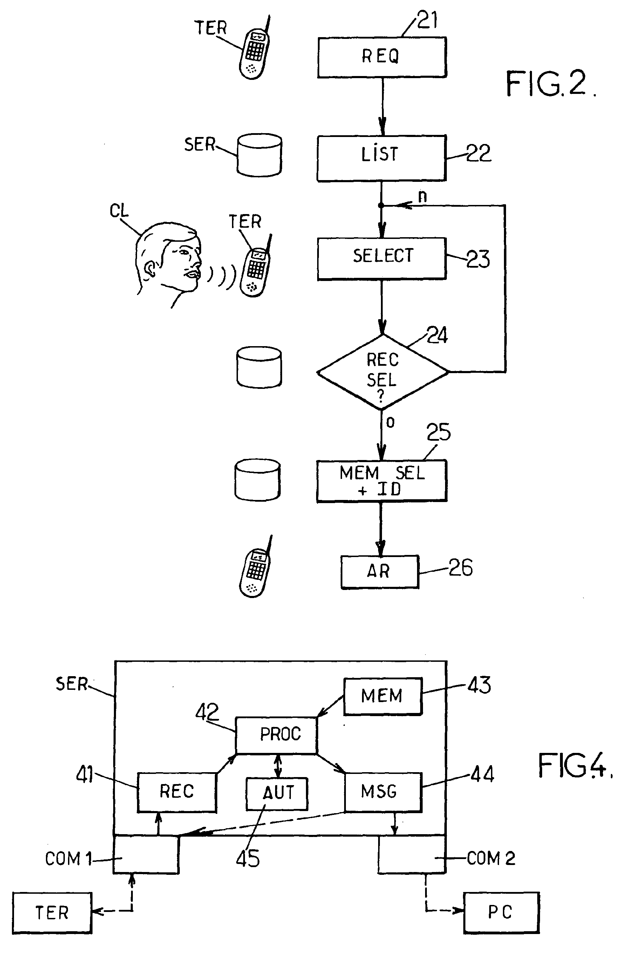

A l'étape 11, le terminal TER se connecte au serveur SER en composant un numéro d'appel du serveur SER (typiquement un numéro court). Le serveur SER identifie le client par son numéro de mobile ID fourni directement, ou encore en demandant au client un identifiant prédéterminé. Sur demande du serveur, le client fournit, via son mobile TER, les informations sur le titre, puis les données relatives au caractère biométrique permettant d'authentifier le client (étape 12). On indique que ces données préalablement enregistrées ont été acquises par une procédure qui sera décrite plus loin, en référence à la figure 2.

Le serveur recherche dans sa base si des données sont stockées pour l'identifiant ID reçu (étape 13). Si aucune donnée n'a été stockée pour cet utilisateur, le serveur SER informe le client, et éventuellement envoie un message correspondant au poste de contrôle PC indiquant que le client n'est pas connu. Par exemple, la procédure de contrôle peut s'arrêter à l'étape de fin 14 si l'identifiant ID n'a pas été reconnu.

Dans une variante avantageuse, le caractère biométrique utilisé est la voix du client et, dans cette variante, les données relatives au titre ainsi que les données relatives au caractère biométrique peuvent être tirées d'un même signal, correspondant à un signal de parole, lequel permet à la fois d'identifier les caractéristiques du titre et d'authentifier le client, en une même étape de traitement. Par exemple, le client CL peut être invité à prononcer une phrase d'identification dans un capteur sonore CAP que comporte son terminal TER. Le signal sonore ainsi capté est transmis, avec-un -identifiant ID du terminal, vers le serveur SER, à l'étape 11 représentée sur la figure 1.

La phrase que prononce le client CL pour former le signal sonore capté à l'étape 11 comporte alors des informations relatives au titre préalablement acquis. Par exemple, la routine qui invite le client CL à prononcer cette phrase peut lui demander de prononcer le nom d'un film et un horaire de séance, si le titre vise une place de cinéma.

Comme indiqué ci-avant, l'identifiant ID du terminal peut correspondre à un numéro d'abonnement associé au terminal TER, notamment dans la réalisation où ce terminal est un téléphone mobile. Dans ce cas, l'identifiant ID peut être transmis sans action spécifique de l'utilisateur. On indique toutefois qu'une variante consisterait en une action particulière de l'utilisateur, par exemple un échange de question/réponse avec le serveur.

Le serveur comporte :
- d'une part, un module de reconnaissance vocale pour reconnaître dans le signal transmis à l'étape 11 les informations DATA(TI) relatives au titre (par exemple le titre du film et l'horaire de la séance) ;
- et d'autre part, un module d'authentification vocale pour comparer les paramètres vocaux DATA(VOC) extraits du signal transmis avec les paramètres vocaux propres à l'utilisateur stockés dans la mémoire du serveur.

A l'étape 12, le serveur extrait du signal transmis à l'étape 11, à l'aide du module de reconnaissance vocale, les données DATA(TI) relatives au titre. Si l'identifiant ID a bien été reconnu, le serveur compare ensuite les données DATA(TI) avec les données stockées pour l'identifiant ID (étape 15). Si aucune donnée n'est reconnue, le serveur SER peut demander une nouvelle saisie à l'utilisateur du terminal TER et, après plusieurs saisies infructueuses, envoyer au poste de contrôle PC un message de refus d'accès qui s'affiche sur un moniteur du poste de contrôle PC.

Ainsi, le module d'authentification calcule puis compare les paramètres vocaux du signal transmis à ceux stockés dans la mémoire du serveur en association avec l'identifiant ID. Si le résultat de la comparaison est négatif, le serveur SER peut demander une nouvelle saisie à l'utilisateur du terminal TER et, après plusieurs saisies infructueuses (par exemple trois), envoyer au poste de contrôle un message de refus d'accès (étape 14) qui s'affiche sur un moniteur du poste de contrôle PC (non représenté).

Si les paramètres vocaux tirés du signal transmis à l'étape 11 coïncident avec les données des paramètres vocaux préalablement enregistrées, et si, en outre, les caractéristiques du titre transmises dans le signal à l'étape 11 correspondent aux données relatives au titre préalablement enregistrées. Le serveur SER transmet au poste de contrôle PC un message d'autorisation d'accès, qui s'affiche sur le moniteur du poste de contrôle PC (étape 16) et délivre un justificatif à l'aide d'une imprimante connectée au poste de contrôle PC.

Dans une réalisation avantageuse, lorsque le poste de contrôle PC termine sa connexion avec le terminal TER, alors que, à l'issue de l'étape 16, le client CL accède au service requis, le poste de contrôle PC émet un message de fin de connexion au serveur SER, indiquant que le titre est bien consommé par le client CL. A l'étape 17, le serveur supprime de sa mémoire toute référence au titre, puisqu'il a été consommé, et transmet au terminal TER (étape 18) un message de consommation du titre pour en informer le client CL.

On indique que dans une réalisation particulière, décrite ici à titre d'exemple non limitatif, au cours de la première étape référencée 10 sur la figure 1, le poste de contrôle PC peut repérer le terminal TER du client CL, de sorte que le terminal TER est identifié auprès du poste de contrôle PC. A cet effet, le terminal mobile TER et le poste PC sont par exemple équipés chacun d'un module de communication locale sans fil. Le poste PC détecte le terminal TER et les données transmises par le terminal transitent avantageusement vers le centre de gestion SER, via le poste de contrôle PC.

En référence à la figure 2, on décrit maintenant le processus d'acquisition du titre, préalable à son contrôle comme décrit en référence à la figure 1. Dans l'exemple représenté, le terminal TER établit une connexion à l'étape 21, avec le serveur SER pour acquérir un titre. D'emblée, le terminal TER transmet son identifiant ID au serveur SER.

Préférentiellement, le serveur SER indique ensuite, à l'étape 22, une liste de choix possibles que le client CL peut sélectionner individuellement. Ces choix possibles peuvent être par exemple des destinations et des vols d'avion ou des titres et des horaires de film. Avantageusement, il est prévu un serveur vocal pour orienter le client CL dans les différents choix possibles. A l'étape 23, le client CL commande une sélection dans cette liste, par exemple vocalement. Le client CL prononce alors les informations relatives au titre dans le capteur sonore que comporte le terminal mobile TER. Le signal sonore correspondant à cette commande vocale est transmis au serveur SER, lequel, à l'étape 24, teste si le signal vocal lui permet de reconnaître une sélection dans les différents choix proposés au client CL. En cas d'incompatibilité, le client CL est invité à nouveau à indiquer oralement son choix.

Ensuite, sur invitation du serveur SER, le client CL transmet, via son terminal TER, les données relatives à un caractère biométrique du client.

Dans la réalisation avantageuse où les données relatives au titre et les données relatives au caractère biométrique peuvent être tirées d'un même signal, tel qu'un signal de parole, le serveur SER reconnaît les données relatives au titre et peut extraire, sensiblement dans la même étape, les données relatives à la voix du client, par reconnaissance vocale.

Ainsi, à l'étape 25, le serveur a obtenu, à la fois :
- les caractéristiques relatives au titre (horaires de séances, titres de films, salles de spectacles, ou autres) ;
- les paramètres vocaux propres au client CL calculés à partir des données relatives au caractère biométrique du client par le serveur.
Comme indiqué ci-avant, le serveur SER possède en outre le numéro ID du terminal mobile TER, en tant qu'identifiant du client CL.

Ces données sont mémorisées dans la mémoire du serveur SER, pour une utilisation ultérieure, en particulier pour un contrôle de coïncidence de ces données avec les données tirées d'un signal, par exemple vocal, capté à l'étape 11 (figure 1), pendant le contrôle de la validité du titre.

On indique que ces données sont mémorisées à l'étape 25, en correspondance de l'identifiant ID du client, ce qui permettra de reconnaître plus aisément les paramètres vocaux propres au client, lors du contrôle du titre.

Avantageusement, l'étape d'acquisition se termine, le cas échéant après une étape de paiement, par la transmission du serveur vers le terminal, d'un accusé de réception (étape 26) consistant en un message, par exemple écrit (tel qu'un message SMS), indiquant les caractéristiques du titre qui a été acquis.

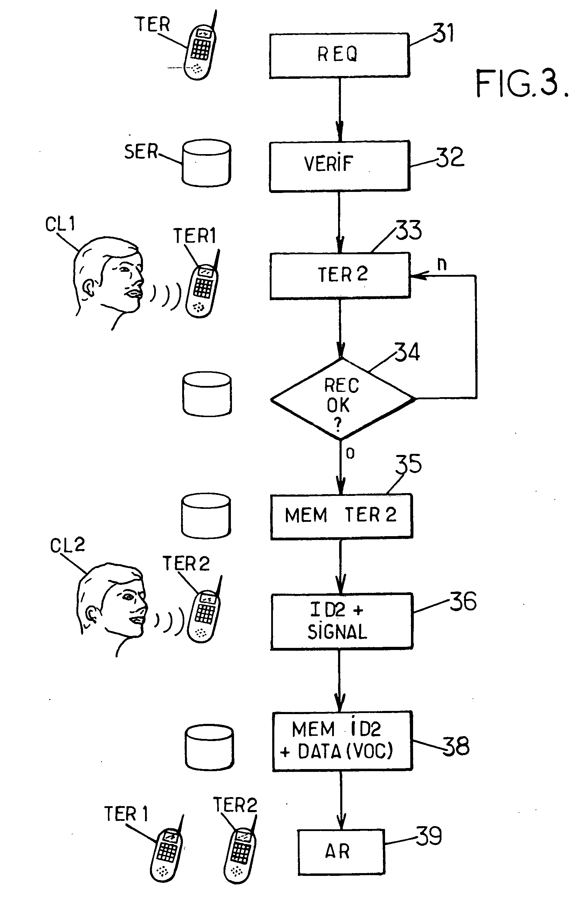

On décrit maintenant, en référence à la figure 3, un procédé pour la cession du titre déjà acquis au profit d'un autre client CL2. Tout d'abord, le premier client CL1, souhaitant céder son titre, établit, à l'étape 31, une connexion vers le serveur SER, à partir de son terminal mobile TER1. A l'étape 32, le serveur démarre une routine de vérification de l'identité de l'appelant et, préférentiellement, demande au client CL1 de prononcer une phrase dans le capteur sonore de son terminal mobile TER1, à l'étape 33. Plus particulièrement, le client CL1 doit indiquer l'identité de la personne CL2 bénéficiaire du titre, ou encore indiquer l'identifiant du terminal TER2 de cette personne CL2. A l'étape 34, le serveur vérifie si les paramètres vocaux du client CL1 sont bien identifiés en correspondance de l'identifiant ID de l'utilisateur CL1 et du titre dont la cession est requise. De manière plus générale, on indique que les étapes de vérification 32 à 34 peuvent être similaires aux étapes 11 à 15 décrites ci avant en référence à la figure 1.

Si la vérification des données relatives au titre, d'une part, et des paramètres vocaux d'autre part, est positive, (étape 34), le serveur mémorise l'identifiant de l'utilisateur CL2 suivi des données relatives au titre.

Le serveur établit ensuite une connexion vers le terminal TER2 du second client CL2 en transmettant un message (étape 36) pour récupérer les données relatives à un caractère biométrique. Le serveur calcule les paramètres vocaux à partir des données reçues. Ces derniers sont mémorisés en correspondance de l'identifiant ID2 du terminal TER2 et des caractéristique du titre, à l'étape 38. Enfin, le serveur envoie aux deux terminaux TER1 et TER2 un accusé de réception, à l'étape 39, indiquant que la cession a bien été enregistrée. Ainsi, lorsque le second client CL2 souhaitera consommer le titre cédé, le serveur consultera dans sa mémoire l'identifiant ID2 du second terminal TER2, les données relatives au titre et les paramètres vocaux.

On se réfère maintenant à la figure 4 sur laquelle on a représenté schématiquement l'architecture d'un serveur pour assurer une gestion des titres, au sens de la présente invention.

Le serveur SER comporte une première interface de communication COM1 avec le terminal mobile TER, pour recevoir le signal comportant préférentiellement :
- l'identifiant du terminal ID,
- les données relatives au titre,
- et les données relatives au caractère biométrique.

Le serveur comporte en outre :
- un module de reconnaissance vocale 41 pour reconnaître les données relatives au titre dans la phrase prononcée ;
- un module d'authentification biométrique 45 qui, d'une part, calcule les paramètres biométriques à partir des données relatives au caractère biométrique et, d'autre part, compare les paramètres stockés en référence avec ceux reçus.

Le serveur comporte aussi des moyens de traitement 42, tels qu'un processeur pour piloter les différentes opérations qu'effectue le serveur et notamment comparer les données biométriques et les données du titre avec celles stockées dans la mémoire 43.

Le serveur comporte enfin un module 44 d'écriture de message de validité ou d'invalidité des titres, ainsi qu'une seconde interface de communication COM2 avec le poste de contrôle PC afin de lui transmettre le message précité. On indique que le module 44 peut être actif aussi pour former des messages destinés au terminal mobile, comme décrit ci-avant en référence aux étapes 17 et 18 de la figure 1.

Bien entendu, la présente invention ne se limite pas à la forme de réalisation décrite ci avant à titre d'exemple ; elle s'étend à d'autres variantes.

Ainsi, on comprendra que, à l'étape 11, comme à l'étape 23, l'utilisateur CL peut sélectionner un choix autrement que par une commande vocale, par exemple en activant des touches de son terminal. Dans cette variante, la reconnaissance des paramètres vocaux de l'utilisateur CL s'effectue alors grâce à une phrase type que prononce l'utilisateur CL.

D'une manière plus générale, on a décrit ci avant, à titre d'exemple, une authentification vocale pour authentifier un utilisateur d'un terminal. On indique qu'une reconnaissance iridienne (ou encore une reconnaissance d'un caractère biométrique quelconque tel qu'une empreinte digitale) peut être prévue en variante. Dans cette variante-, le terminal TER comporte un lecteur optique capable d'effectuer une prise de vue de l'iris de l'utilisateur CL ou un capteur d'empreinte digitale capable de saisir une image d'empreinte digitale et d'en extraire les données essentielles qui permettront d'authentifier l'utilisateur CL. Ces données essentielles peuvent être transmises au serveur pour mémorisation et/ou contrôle de coïncidence avec des données préalablement mémorisées, tout comme les données vocales dans la réalisation à reconnaissance vocale décrite ci-avant.

On a décrit ci-avant une étape d'acquisition du titre effectuée à partir du terminal mobile du client. En variante, cette étape peut s'effectuer à partir d'une connexion Internet ou d'un téléphone fixe. Si le poste (informatique ou téléphonique) utilisé est muni d'un capteur permettant la saisie de données biométriques (microphone, capteur d'empreinte ou d'iris, ou autre), la saisie de ces données peut être faite directement. Sinon, le serveur invitera le client à indiquer un numéro d'abonné (sur téléphone mobile ou fixe) pour rappeler ce poste et saisir ces données ultérieurement. On indique en outre que si le poste précité est muni de plusieurs types de capteurs permettant d'obtenir plusieurs références biométriques pour un même individu, le caractère biométrique utilisé peut être choisi par le client, ou encore par le serveur.

On a décrit ci-avant une étape de contrôle dans laquelle le terminal transmet les données biométriques. En complément ou en variante, le poste de contrôle peut comporter aussi des moyens d'acquisition de ces données. Dans ce cas, le poste de contrôle est équipé d'un capteur tel qu'un microphone, ou encore un lecteur d'empreinte iridienne ou digitale, et transmet les informations recueillies au centre de gestion. Cette variante peut s'avérer avantageuse si le centre de gestion ne parvient pas à déchiffrer les données biométriques que transmet le terminal ou si ce dernier ne comporte pas de capteur ou comporte un capteur défaillant.

## Revendications

1. Procédé de contrôle d'un titre d'autorisation d'accès à un service ou d'acquisition d'un produit, dans lequel :
a) on prévoit :
- un terminal mobile, à disposition d'un client, capable de fournir un signal comportant des données relatives à au moins un caractère biométrique du client et à partir desquelles le client peut être authentifié,
- un centre de gestion des titres, comportant une mémoire pour stocker des données, et capable de communiquer avec ledit terminal mobile,
- et au moins un poste de contrôle capable de communiquer avec le centre de gestion,
b) préalablement au contrôle, on stocke, dans la mémoire du centre de gestion, une séquence de données relatives au moins à un titre du client et des données relatives à un caractère biométrique propre audit client, en association avec un identifiant du client,
c) et, au contrôle, le terminal transmet au moins ledit signal vers le centre de gestion tandis que le centre de gestion :
- compare des données relatives au caractère biométrique et extraites du signal reçu aux données stockées dans la mémoire du centre de gestion,
- et renvoie au poste de contrôle un message de validité ou d'invalidité du titre, en fonction de ladite comparaison et des données relatives au titre et stockées dans la mémoire du centre de gestion.

2. Procédé selon la revendication 1, dans lequel ledit signal est un signal de parole, tandis que le centre de gestion des titres effectue, à partir dudit signal, une authentification vocale permettant d'authentifier la voix du client.

3. Procédé selon la revendication 2, dans lequel le centre de gestion identifie dans ledit signal, à la fois, des informations sur ledit titre et les données relatives à la voix du client.

4. Procédé selon la revendication 3, dans lequel ledit signal est un signal de parole correspondant à une phrase que prononce le client en indiquant des caractéristiques du titre, et dans lequel le centre de gestion des titres reconnaît les mots prononcés dans ladite phrase et détermine une correspondance avec des données relatives au titre et stockées dans la mémoire du centre de gestion.

5. Procédé selon la revendication 4, dans lequel, à l'étape d'acquisition b), le client établit une connexion entre son terminal et le centre de gestion et, pendant cette connexion :
- le centre de gestion invite le client à prononcer ladite phrase dans son terminal,
- le centre de gestion reconnaît dans ladite phrase des caractéristiques du titre et identifie des paramètres vocaux propres au client,
- le centre de gestion stocke dans sa mémoire, l'identifiant du client et, en correspondance de cet identifiant, les caractéristiques du titre et les paramètres vocaux propres au client, sous forme de données.

6. Procédé selon la revendication 4, dans lequel, à l'étape d'acquisition b), le client établit une connexion entre son terminal et le centre de gestion et, pendant cette connexion :
- le centre de gestion invite le client à choisir des caractéristiques du titre,
- le centre de gestion invite le client à prononcer en outre une phrase type dans son terminal,
- le centre de gestion identifie dans ladite phrase type des paramètres vocaux propres au client,
- le centre de gestion stocke dans sa mémoire, l'identifiant du client et, en correspondance de cet identifiant, les caractéristiques du titre et les paramètres vocaux propres au client, sous forme de données.

7. Procédé selon l'une des revendications précédentes, dans lequel, pour céder le titre d'un premier client au profit d'un second client :
- le terminal du premier client transmet au moins ledit signal vers le centre de gestion, avec un identifiant d'un terminal du second client,
tandis que le centre de gestion :
- compare des données relatives à un caractère biométrique identifié à partir du signal reçu à des données stockées dans la mémoire du centre de gestion,
- établit une connexion avec le terminal du second client pour obtenir des données relatives à un caractère biométrique propre au second client, et
- stocke, dans ladite mémoire, une séquence de données relatives au caractère biométrique propre au second client, en association avec les données relatives au titre et avec l'identifiant du second client.

8. Procédé selon l'une des revendications précédentes, dans lequel le caractère biométrique est une empreinte iridienne.

9. Procédé selon l'une des revendications précédentes, dans lequel le caractère biométrique est une empreinte digitale.

10. Système de contrôle d'un titre d'autorisation d'accès à un service ou d'acquisition d'un produit, **caractérisé en ce qu'**il comporte :
- un terminal mobile, à disposition d'un client, capable de fournir un signal comportant des données relatives à au moins un caractère biométrique du client, ainsi qu'un identifiant de client,
- un centre de gestion des titres, comportant une mémoire pour stocker des données relatives au titre et des données relatives au caractère biométrique propre au client, en association avec l'identifiant du client, et capable de communiquer avec ledit terminal mobile pour obtenir ledit signal et comparer des paramètres biométriques tirés dudit signal à des paramètres biométriques tirés des données stockées dans ladite mémoire,
- au moins un poste de contrôle capable de communiquer avec ledit centre de gestion pour recevoir dudit centre de gestion un message d'autorisation ou de refus d'accès.

11. Système selon la revendication 10, dans lequel le terminal comporte un capteur sonore, **caractérisé en ce que** le signal que délivre le terminal est un signal de parole, tandis que le centre de gestion des titres comporte un dispositif d'authentification permettant d'authentifier la voix du client.

12. Système selon la revendication 11, dans lequel ledit signal est un signal de parole correspondant à une phrase que prononce le client en indiquant des caractéristiques du titre, **caractérisé en ce que** le centre de gestion des titres comporte en outre un module de reconnaissance vocale, propre à reconnaître les mots prononcés dans ladite phrase et à déterminer une correspondance avec des données du titre stockées dans la mémoire dudit centre de gestion.

13. Serveur pour assurer la gestion de titres d'autorisation d'accès à un service ou d'acquisition d'un produit par des clients, destiné à un système de contrôle desdits titres, **caractérisé en ce qu'**il comporte :
- une mémoire pour stocker, pour chaque client, des données relatives à un titre et des données relatives à au moins un caractère biométrique propre audit client, en association avec un identifiant dudit client,
- des moyens de réception et de traitement d'un signal acquis pendant une phase de contrôle, ledit signal comportant :
o un identifiant de client,
o des données relatives à un titre et
o des données relatives à au moins un caractère biométrique propre à un candidat,
- des moyens de comparaison des données tirées dudit signal et des données stockées dans ladite mémoire pour vérifier une validité du titre et authentifier le candidat en tant que client, et
- des moyens pour transmettre un message d'autorisation ou de refus d'accès.

14. Serveur selon la revendication 13, propre à recevoir et traiter ledit signal en tant que signal de parole, **caractérisé en ce qu'**il comporte en outre un dispositif d'authentification permettant d'authentifier la voix du client.

15. Serveur selon la revendication 14, **caractérisé en ce que** le dispositif de reconnaissance vocale est propre à reconnaître, dans ledit signal, des mots d'une phrase que prononce le client et indiquant des caractéristiques du titre, et **en ce que** lesdits moyens de comparaison sont aptes à déterminer une correspondance avec des données du titre stockées dans la mémoire.
